# EUROPÄISCHE PATENTSCHRIFT

(11) **EP 1 234 764 B1**
(45) Veröffentlichungstag und Bekanntmachung des Hinweises auf die Patenterteilung: **14.07.2004**
(21) Anmeldenummer: 02002742.1
(22) Anmeldetag: 07.02.2002
(51) Int. Cl.: B64D 33/04, F02K 1/82

(54) **Vorrichtung zur Verminderung der IR-Zielsignatur von Luftfahrzeugen**
Aircraft infrared suppressor
Dispositif de suppression d'infrarouges pour aéronef

(30) Priorität: 24.02.2001 DE 10109274
(43) Veröffentlichungstag der Anmeldung: 28.08.2002
(73) Patentinhaber: DORNIER GmbH, 88039 Friedrichshafen (DE)
(72) Erfinder: Obkircher, Bernt, Dr., 88263 Horgenzell (DE)
(74) Vertreter: Meel, Thomas

(56) Entgegenhaltungen:
- DE-A- 19 721 429
- DE-A- 19 842 763
- US-A- 3 901 035
- US-A- 4 303 035
- US-A- 4 308 721
- US-A- 5 269 132

## Beschreibung

Die Erfindung betrifft eine Vorrichtung zur Verminderung der IR-Zielsignatur von Luftfahrzeugen gemäß dem Oberbegriff des Patentanspruchs 1.

Lenkflugkörper mit IR-Suchkopf sind für Luftfahrtzeuge eine Bedrohung, weil sie mit ihrer nicht zu vermeidenden IR-Abstrahlung eine gute Zielsignatur für den IR-Suchkopf der Lenkflugkörper darstellen. Um solche Lenkflugkörper abzuwehren, können die Luftfahrzeuge IR-Scheinziele (flares) ausstoßen, die die Bedrohung auf sich ziehen und somit vom echten Ziel ablenken sollen. Im IR-Suchkopf moderner Lenkflugkörper sind allerdings für den Fall einer solchen Gegenmaßnahme bestimmte Logiken vorgesehen, die darin bestehen, dass der Suchkopf nach Erkennen des Ausstoßes eines Scheinziels, dasjenige Ziel als das echte erkennt, das am ehesten der IR-Strahlung des Zieles entspricht, bevor das Scheinziel zusätzlich im Suchkopf des Lenkflugkörpers erschien. Dieser Logikbaustein im Suchkopf sorgt dafür, dass IR-Scheinziele wirkungslos werden, solange das echte Ziel zusätzlich zum Ausstoß eines Scheinziels nicht abrupt die eigene IR-Abstrahlung stark verändert.

Mittels Einspritzung einer Kühlflüssigkeit in den Abgasstrahl eines Luftfahrzeugs ist es möglich, das austretende Abgas zu kühlen und so die IR-Signatur des Luftfahrzeugs zu verändern. Aus DE 197 21 429 A1 ist ein solches Verfahren sowie eine Vorrichtung zur Durchführung des Verfahrens bekannt. Dabei wird eine Kühlflüssigkeit mittels einer Vorrichtung, umfassend ein Tank, eine Hochdruckpumpe sowie ein Leitungs- und Düsensystem, in den Abgasstrahl des Luftfahrzeugs verdüst. Der Nachteil dabei ist, dass es mit herkömmlichen Hochdruckpumpen nicht möglich ist, innerhalb von Bruchteilen von Sekunden, üblicherweise unterhalb 1/10 Sekunde, den für eine feine Verdüsung und für die erforderlichen hohen Durchsatzmengen nötigen Druck aufzubauen.

Aus US 4,308,721 ist eine Bedruckungsvorrichtung für Flüssigkeitsdruckversorgungen bekannt. Bei dieser Bedruckungsvorrichtung wird mittels eines beweglichen Kolbens eine Flüssigkeit unter hohem Druck aus einem Tank gedrückt. Der Kolben wird dabei durch das bei der Explosion von Explosivladungen enstehende Gas bewegt. Durch mehrere nacheinander zündenden Explosivladungen wird der Kolben schrittweise von einem Anschlag zum gegenüberliegenden anderen Anschlag (Endanschlag) bewegt, wobei die Flüssigkeit stoßweise aus dem Tank gedrückt wird. Ein Nachteil dieser Anordnung ist, dass immer nur kleine Mengen Flüssigkeit aus dem Tank gedrückt werden können. Diese kleinen Mengen reichen allerdings nicht aus um das Abgas nachhaltig zu kühlen. Außerdem ist ein erneuter Betrieb der Vorrichtung, nachdem der Kolben den Endanschlag erreicht hat nicht mehr möglich.

Aufgabe der Erfindung ist es, eine Vorrichtung zu schaffen, mit der es möglich ist, den nötigen Druck für eine feine Verdüsung der Kühlflüssigkeit im Abgas und die nötige Durchsatzmenge in Bruchteilen von einer Sekunde aufzubauen.

Diese Aufgabe wird durch den Gegenstand des Patentanspruchs 1 gelöst. Vorteilhafte Ausführungen der Erfindung sind Gegenstand von Unteransprüchen.

Gemäß der Erfindung ist der Vorratstank über eine Pumpe mit einem Hochdrucktank verbunden, welcher im Innern einen Kolben aufweist, der den Innenraum des Hochdrucktanks in einen Gasraum und einen Flüssigkeitsraum teilt und zwischen zwei Endanschlägen beweglich ist. Erfindungsgemäß sind eine Anzahl von Gasgeneratoren mit Festtreibstoff vorhanden, die im Gasraum angeordnet oder mit dem Gasraum verbunden sind, wobei nach Zünden des Festtreibstoffs das aus einem Gasgenerator entweichende Gas den Kolben im Hochdrucktank bewegt. Gemäß der Erfindung ist ein an den Gasraum angeschlossenes Entlüftungsventil vorhanden.

Das Rohrleitungs- und Schlauchsystem ist in einer vorteilhaften Ausführung der Erfindung über eine Öffnung am Hochdrucktank, die zwischen beiden Endanschlägen des beweglichen Kolbens ausgeführt ist, mit dem Hochdrucktank verbunden. Diese Öffnung befindet sich zweckmäßig vor dem flüssigkeitsraumseitigen Anschlag, in einem Abstand der ausreicht, dass sich der gesamte bewegliche Kolben über diese Öffnung hinweg bewegen kann.

In einer weiteren vorteilhaften Ausführung der Erfindung ist ein druckloser Tank zur Bevorratung der Kühlflüssigkeit vorhanden. Der drucklose Tank ist dabei mit der Pumpe zur Befüllung des Hochdrucktanks verbunden.

In dem Hochdrucktank werden mittels des in seinem Innern beweglichen Kolbens zwei voneinander getrennte Hohlräume, insbesondere ein Gas- und ein Flüssigkeitsraum gebildet. Der Flüssigkeitsraum des Hochdrucktanks ist erfindungsgemäß mittels der Pumpe und dem daran angeschlossenen vorteilhaft drucklos ausgebildeten Vorratstank mit der Kühlflüssigkeit befüllbar. Durch Einfüllen der Flüssigkeit in den Hochdrucktank wird der frei bewegliche Kolben bis zu dem gasraumseitigen Anschlag verschoben, wobei der Gasraum entsprechend der eingefüllten Kühlflüssigkeitsmenge verkleinert wird. Erfindungsgemäß ist hierfür im Gasraum ein Entlüftungsventil vorgesehen, welches bei der Befüllung des Flüssigkeitsraums geöffnet wird um einen Druckaufbau im Gasraum aufgrund der Volumenverkleinerung zu vermeiden.

Wird eine Veränderung der IR-Signatur des Luftfahrzeugs benötigt, wird ein an den Gasraum angeschlossener Gasgenerator mit Festtreibstoff gezündet. Der Gasgenerator ist dabei vorteilhaft entweder innerhalb des Gasraums des Hochdrucktanks angeordnet oder über Leitungen, insbesondere druckbeständige Leitungen, mit dem Gasraum verbunden.

Nach der Zündung des Gasgenerators wird insbesondere nach Platzen der Berstscheibe, welche die Verbindung zwischen dem Gasraum und dem Gasgenerator bildet, ein Druck innerhalb des Gasraums aufgebaut. Der bewegliche Kolben wird dadurch in Richtung des flüssigkeitsraumseitigen Anschlags verschoben, wodurch die Flüssigkeit aus dem Flüssigkeitsraum des Hochdrucktanks in das daran angeschlossene Rohrleitungs- oder Schlauchsystem gedrückt wird. In dem Rohrleitungs- oder Schlauchsystem wird die Flüssigkeit dann in ein Düsensystem geleitet, in der die Flüssigkeit in den Abgasstrahl gespritzt wird. Dabei bewegt sich der Kolben über die Öffnung hinweg, durch die das Rohrleitungs- und Schlauchsystem mit dem Hochdrucktank verbunden ist. Nachdem sich der Kolben über diese Öffnung hinweg bewegt hat, ist das Rohrleitungs- und Schlauchsystem nicht mehr mit dem Flüssigkeitsraum, sondern mit dem Gasraum des Hochdrucktanks verbunden. Durch den im Gasraum anliegenden Druck wird das Gas durch das Rohrleitungs- oder Schlauchsystem gedrückt, wodurch der Gasraum drucklos wird. Außerdem werden somit Rückstände aus den Leitungen des Rohrleitungs- oder Schlauchsystems beseitigt, was bei der Verwendung von z.B. Solen als Kühlflüssigkeit notwendig ist.

Ein weiterer Vorteil ist, dass sofort nach Zünden des Gasgenerators und Bersten der Berstscheibe der entsprechende Druck vorhanden ist und die Kühlflüssigkeit aufgrund der Bewegung des Kolbens ohne Druckverlust in das Rohrleitungs- oder Schlauchsystem geleitet werden kann. Es wird daher keine Pumpe zum Aufbau des Drucks benötigt. Somit kommt es bei der erfindungsgemäßen Vorrichtung zu keiner Verzögerung beim Druckaufbau.

Dieser Vorgang der Veränderung der IR-Signatur des Luftfahrzeugs mittels Befüllung des Hochdrucktanks mit der Kühlflüssigkeit und Zünden eines Gasgenerators kann so oft wiederholt werden, wie Gasgeneratoren vorhanden sind und Flüssigkeit im Vorratstank vorhanden ist. Vorteilhaft wird als Kühlflüssigkeit auch Kerosin eingesetzt, wodurch kein Vorratstank benötigt wird, da das zur Kühlung benötigte Kerosin dem Treibstofftank des Luftfahrzeugs entnommen werden kann. Somit ergeben sich dann weiter Vorteile hinsichtlich einer Platz- und Gewichtsersparnis.

In einer vorteilhaften Ausführung der Erfindung ist das Düsensystem im Nachbrennerraum des Luftfahrzeugs angeordnet. So ist es möglich, die Kühlflüssigkeit im Nachbrennerraum in das Abgas einzuspritzen.

In einer weiteren vorteilhaften Ausführung der Erfindung ist das Rohrleitungs- oder Schlauchsystem mit dem Kraftstoffzuleitungssystem des Nachbrenners verbunden. Diese Anbindung des Rohrleitungs- oder Schlauchsystems an das Kraftstoffzuleitungssystem erfolgt vorteilhaft über ein Dreiwegeventil. Somit ist es möglich, dass die Kühlflüssigkeit direkt über die Kraftstoffzuleitungen des Nachbrenners in den Nachbrenner gelangt und dort so verdüst wird, wie dies üblicherweise mit Kraftstoff im normalen Nachbrennerbetrieb erfolgt.

Ein elektrisches Heizungssystem mit sensorgesteuerter Regelung ermöglicht in einer weiteren vorteilhaften Ausführung der Erfindung eine Temperierung der Kühlflüssigkeit. Dadurch wird verhindert, dass die Kühlflüssigkeit im Vorratstank, im Hochdrucktank oder in den Leitungen gefriert. Dabei kann die Leistung des elektrischen Heizungssystems je nach Einsatz der Kühlflüssigkeit dimensioniert werden. So ist bei der Verwendung von z.B. Solen als Kühlflüssigkeit eine geringe Heizleistung nötig, da Solen aufgrund des Effekts der Gefrierpunktserniedrigung einen sehr niedrigen Gefrierpunkt aufweisen.

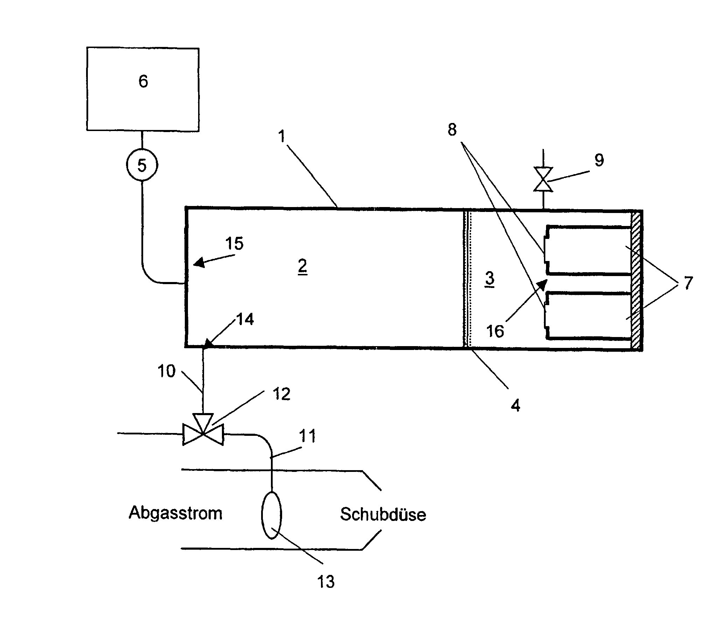

Die Erfindung wird im folgenden anhand einer einzigen Zeichnung, die den Aufbau einer erfindungsgemäßen Vorrichtung zur Verminderung der IR-Zielsignatur von Luftfahrzeugen zeigt, erläutert.

Die einzige Zeichnung zeigt einen Hochdrucktank 1, der über eine Pumpe 5 mit einem Vorratstank 6 mit Kühlflüssigkeit verbunden ist. Innerhalb des Hochdrucktanks 1 befindet sich ein beweglicher Kolben 4, der den Innenraum des Hochdrucktanks 1 in einen Flüssigkeitsraum 2 und einen Gasraum 3 teilt. Der Kolben 4 ist dabei zwischen einem flüssigkeitsraumseitigen Anschlag 15 und einem gasraumseitigen Anschlag 16 beweglich.

Im Gasraum 3 befinden sich Gasgeneratoren 7 mit Festreibstoff. Es ist aber auch möglich, dass die Gasgeneratoren 7 außerhalb des Hochdrucktanks 1 angeordnet sind und über ein nicht dargestelltes Leitungssystem mit dem Gasraum 3 verbunden sind. Die Öffnungen der Gasgeneratoren 7 sind mittels einer Berstscheibe 8 verschlossen. Außerdem ist ein Entlüftungsventil 9 an den Gasraum 3 angeschlossen, welches beim Befüllen des Flüssigkeitsraums 2 geöffnet wird und nachdem der Flüssigkeitsraum 2 vollständig befüllt wurde - der Kolben 4 befindet sich am gasraumseitigen Anschlag 16 - geschlossen wird.

Der Flüssigkeitsraum 2 ist über ein Rohrleitungs- oder Schlauchsystem 10 mit einem, in die Kraftstoffleitung 11 des Luftfahrzeugs angeordneten Dreiwegeventil 12 verbunden. Das Rohrleitung- oder Schlauchsystem 10 ist dabei über eine Öffnung 14 mit dem Hochdrucktank 1 verbunden. Diese Öffnung 14 befindet sich in einem ausreichenden Abstand vor dem flüssigkeitsraumseitigen Anschlag 15, so dass der Kolben 4 vollständig über diese Öffnung 14 hinweg bewegt werden kann.

Beim Befüllen des Flüssigkeitsraums 2 wird die Kühlflüssigkeit aus dem drucklosen Vorratstank 6 über die Pumpe 5 in den Hochdrucktank 1 gedrückt. Dabei wird der bewegliche Kolben 4 in Richtung des gasraumseitigen Anschlags 16 verschoben. Das sich im Gasraum 3 befindliche Gas entweicht dabei durch das geöffnete Entlüftungsventil 9, so dass im Gasraum 3 kein Druck aufgebaut werden kann. Sobald der Befüllungsvorgang des Flüssigkeitsraums 2 abgeschlossen ist, wird das Entlüftungsventil 9 geschlossen. Das Dreiwegeventil 12 ist während des Vorgangs der Befüllung derart geschaltet, dass die Kühlflüssigkeit nicht in die Kraftstoffleitung 11 des Nachbrenners fließen kann, d.h. ein normaler Nachbrennerbetrieb ist möglich.

Im Fall der Einspritzung der Kühlflüssigkeit in den Abgasstrahl des Luftfahrzeugs, also im Fall der Notwendigkeit einer Veränderung der IR-Signatur, wird ein Gasgenerator 7 gezündet. Gleichzeitig mit der Zündung des Gasgenerators 7 wird das Dreiwegeventil 12 umgeschaltet, so dass die Kühlflüssigkeit durch das Rohrleitungs- oder Schlauchsystem 10 in die Kraftstoffleitung 11 des Nachbrenners gelangen kann.

Durch den sich im Gasgenerator 7 aufbauenden Druck wird die Berstscheibe 8 des gezündeten Gasgenerators 7 zerstört und das Gas entweicht in den Gasraum 3. Aufgrund des nun im Gasraum 3 stark angestiegenen Drucks wird der bewegliche Kolben 4 in Richtung des flüssigkeitsraumseitigen Anschlags 15 bewegt. Durch die Bewegung des Kolbens 4 wird die Kühlflüssigkeit aus dem Flüssigkeitsraum 2 durch die Öffnung 14 in das Rohrleitung- oder Schlauchsystem 10 und durch das Dreiwegeventil 12 in die Kraftstoffleitung 11 des Nachbrenners geleitet. Die Kühlflüssigkeit wird zum Düsensystem 13 des Nachbrenners transportiert, wo sie in den Abgasstrom eingespeist wird.

Der Kolben 4 bewegt sich bei der Entleerung des Flüssigkeitsraums 2 über die Öffnung 14 hinweg. Sobald der Kolben 4 sich vollständig über die Öffnung 14 hinweg bewegt hat, ist der Gasraum 3 des Hochdrucktanks 1 über die Öffnung 14 mit dem Rohrleitungs- oder Schlauchsystem 10 verbunden. Das im Gasraum 2 unter Druck stehende Gas entweicht nun durch die Öffnung 14 in das Rohrleitungs- oder Schlauchsystem 10 und durch das Dreiwegeventil 12 in die Kraftstoffleitung 11 des Nachbrenners. Somit wird der Gasraum 2 drucklos.

Zur erneuten Befüllung des Hochdrucktanks 1 wird das Dreiwegeventil 12 umgeschaltet. Ein normaler Nachbrennerbetrieb ist wieder möglich.

## Patentansprüche

1. Vorrichtung zur Verminderung der IR-Zielsignatur von Luftfahrzeugen, die von Lenkflugkörpern mit IR-Suchköpfen bedroht werden, wobei das Abgas mittels Einspritzung einer Kühlflüssigkeit abgekühlt wird, umfassend
- ein Vorratstank (6) zur Bevorratung einer Kühlflüssigkeit,
- ein Düsensystem (13), mittels dem die Kühlflüssigkeit direkt in das Abgas gespritzt wird und
- ein Rohrleitungs- oder Schlauchsystem (10) zur Verteilung der Flüssigkeit
**dadurch gekennzeichnet, dass** der Vorratstank (6) über eine Pumpe (5) mit einem Hochdrucktank (1) verbunden ist, welcher im Innern einen Kolben (4) aufweist, der den Innenraum des Hochdrucktanks (1) in einen Gasraum (3) und einen Flüssigkeitsraum (2) teilt und zwischen zwei Endanschlägen (15, 16) beweglich ist, dass eine Anzahl von Gasgeneratoren (7) mit Festtreibstoff vorhanden sind, die im Gasraum (3) angeordnet oder mit dem Gasraum (3) verbunden sind, wobei nach Zünden des Festtreibstoffs das aus einem Gasgenerator entweichende Gas den Kolben (4) im Hochdrucktank (1) bewegt und dass ein an den Gasraum (3) angeschlossenes Entlüftungsventil (6) vorhanden ist.

2. Vorrichtung nach Anspruch 1, **dadurch gekennzeichnet, dass** das Rohrleitungsoder Schlauchsystem (10) mit dem Hochdrucktank (1) über eine zwischen beiden Endanschlägen (15, 16) des beweglichen Kolbens (4) ausgeführte Öffnung (14) verbunden ist.

3. Vorrichtung nach einem der vorangehenden Ansprüche, **dadurch gekennzeichnet, dass** das Düsensystem (13) im Nachbrennerraum des Luftfahrzeugs angeordnet ist, so dass die Kühlflüssigkeit im Nachbrennerraum in das Abgas eingespritzt wird.

4. Vorrichtung nach Anspruch 1 oder 2, **dadurch gekennzeichnet, dass** das Rohrleitungs- oder Schlauchsystem (10) mit dem Kraftstoffzuleitungssystem (11) des Nachbrenners verbunden ist.

5. Vorrichtung nach Anspruch 4, **dadurch gekennzeichnet, dass** ein Dreiwegeventil (12) vorhanden ist, über welches das Rohrleitungs- oder Schlauchsystem (10) mit dem Kraftstoffzuleitungssystem (11) des Nachbrenners verbunden ist.

6. Vorrichtung nach einem der vorangehenden Ansprüche, **dadurch gekennzeichnet, dass** ein elektrisches Heizungssystem zur Temperierung der Kühlflüssigkeit vorhanden ist.

7. Vorrichtung nach einem der vorangehenden Ansprüche, **dadurch gekennzeichnet, dass** ein druckloser Vorratstank (6) zur Bevorratung der Kühlflüssigkeit vorhanden ist.

8. Vorrichtung nach einem der vorangehenden Ansprüche, **dadurch gekennzeichnet, dass** als Kühlflüssigkeit Kerosin oder Solen eingesetzt werden.

## Claims

1. Apparatus for reduction of the IR target signature from aircraft which are threatened by guided missiles with IR seeker heads, with the exhaust gas being cooled down by spraying a cooling liquid, comprising
- a reservoir tank (6) for holding a cooling liquid
- a nozzle system (13) by means of which the cooling liquid is sprayed directly into the exhaust gas, and
- a pipeline or flexible tube system (10) for distribution of the liquid,
**characterized in that** the reservoir tank (6) is connected via a pump (5) to a high-pressure tank (1) which has a piston (4) in the interior, which piston (4) divides the interior of the high-pressure tank (1) into a gas area (3) and a liquid area (2), and can move between two end stops (15, 16), **in that** a number of solid-fuelled gas generators (7) are provided, which are arranged in the gas area (3) or are connected to the gas area (3), with the gas which escapes from a gas generator moving the piston (4) in the high-pressure tank (1) after ignition of the solid fuel, and **in that** a vent valve (6), which is connected to the gas area (3), is provided.

2. Apparatus according to Claim 1, **characterized in that** the pipeline or flexible tube system (10) is connected to the high-pressure tank (1) via an opening (14) which is formed between the two end stops (15, 16) of the moving piston (4).

3. Apparatus according to one of the preceding claims, **characterized in that** the nozzle system (13) is arranged in the afterburner area of the aircraft, so that the cooling liquid is sprayed into the exhaust gas in the afterburner area.

4. Apparatus according to Claim 1 or 2, **characterized in that** the pipeline or flexible tube system (10) is connected to the fuel supply system (11) for the afterburner.

5. Apparatus according to Claim 4, **characterized in that** a three-way valve (12) is provided, via which the pipeline or flexible tube system (10) is connected to the fuel supply system (11) for the afterburner.

6. Apparatus according to one of the preceding claims, **characterized in that** an electrical heating system is provided for heating the cooling liquid.

7. Apparatus according to one of the preceding claims, **characterized in that** an unpressurized reservoir tank (6) is provided for holding the cooling liquid.

8. Apparatus according to one of the preceding claims, **characterized in that** kerosene or solene is used as the cooling liquid.

## Revendications

1. Dispositif pour réduire les signatures IR de cibles d'aéronefs qui sont menacés par des missiles téléguidés équipés d'autodirecteur à infrarouge, les gaz d'échappement étant refroidis par l'injection d'un liquide de refroidissement, comprenant
- un réservoir de stockage (6) pour l'alimentation en liquide de refroidissement,
- un système de buse (13) au moyen duquel le liquide de refroidissement est injecté directement dans le gaz d'échappement et
- un système de canalisation ou de flexible (10) pour la répartition du liquide,
**caractérisé en ce que** le réservoir de stockage (6) est relié par une pompe (5) à un réservoir à haute pression (1), qui présente à l'intérieur un piston (4) qui divise l'espace intérieur du réservoir à haute pression (1) en un compartiment pour gaz (3) et un compartiment pour liquide (2) et est déplaçable entre deux butées extrêmes (15, 16), **en ce qu'**un certain nombre de générateurs de gaz (7) avec du combustible solide sont présents, lesquels sont disposés dans le compartiment pour gaz (3) ou sont reliés au compartiment pour gaz (3), le gaz s'échappant d'un générateur de gaz déplaçant le piston (4) dans le réservoir à haute pression (1) après l'inflammation du combustible solide et **en ce qu'**une vanne d'évacuation d'air (6) raccordée au compartiment pour gaz (3) est présente.

2. Dispositif selon la revendication 1, **caractérisé en ce que** le système de canalisation ou de flexible (10) est relié au réservoir à haute pression (1) au moyen d'une ouverture (14) pratiquée entre les deux butées d'extrémité (15, 16) du piston (4) mobile.

3. Dispositif selon l'une quelconque des revendications précédentes, **caractérisé en ce que** le système de buse (13) est disposé dans le compartiment du post-brûleur de l'aéronef, de sorte que le liquide de refroidissement dans l'espace du post-brûleur est injecté dans le gaz d'échappement.

4. Dispositif selon la revendication 1 ou 2, **caractérisé en ce que** le système de canalisation ou de flexible (10) est relié au système d'arrivée de carburant (11) du post-brûleur.

5. Dispositif selon la revendication 4, **caractérisé en ce qu'**une vanne à trois voies (12) est présente, par laquelle le système de canalisation ou de flexible (10) est relié au système d'arrivée de carburant (11) du post-brûleur.

6. Dispositif selon l'une quelconque des revendications précédentes, **caractérisé en ce qu'**un système de chauffage électrique pour la mise à température du liquide de refroidissement est présent.

7. Dispositif selon l'une quelconque des revendications précédentes, **caractérisé en ce qu'**un réservoir de stockage (6) hors pression pour l'alimentation en liquide de refroidissement est présent.

8. Dispositif selon l'une quelconque des revendications précédentes, **caractérisé en ce que** du kérosène ou du solène est utilisé comme liquide de refroidissement.
